# EUROPEAN PATENT APPLICATION

(11) **EP 0 767 451 A1**
(43) Date of publication of application: **09.04.1997**
(21) Application number: 96307099.0
(22) Date of filing: 27.09.1996
(51) Int. Cl.: G11B 5/55, G11B 5/584

(54) **A method for detecting the edge of tape**

(30) Priority: 02.10.1995 US 4727; 19.04.1996 US 636743
(71) Applicant: AIWA CO., LTD., Taito-ku, Tokyo 110 (JP)
(72) Inventor: Millerd, Andrew B, Jr, c/o Aiwa Digital Tech, Inc, Santa Ana, California 92705-5723 (US)
(74) Representative: Prutton, Roger

(57) **Abstract**

A method for digitally detecting a top or bottom edge of a magnetic media, such as magnetic tape, to enable accurate positioning of a transversely movable magnetic head assembly at any of a plurality of track locations across a width of magnetic media. In particular, the magnetic head assembly is positioned to a location that is known to be on the tape. The magnetic head assembly typically includes one or more read and write heads. A reference signal is recorded, and the width is measured by stepping the head assembly down through the recorded signal and testing for the presence or absence of the signal. Then, the read/write head assembly is successively stepped down the center of the magnetic tape (with a write pass followed by a read pass) until it fails to recover a signal, thus indicating that the write head has gone off the edge of the tape. The read/write head assembly is then stepped back up on the tape until a signal is recovered with a width that is equal to one-half (1/2) the reference width. In the preferred embodiment of the invention, a digital burst detector is utilized to determined the presence or non presence of a specific signal.

## Description

### REFERENCE TO RELATED APPLICATION

This is a continuation of U.S. Provisional Application No. 60/004,727, filed October 2, 1995.

### BACKGROUND OF THE INVENTION

### Field of the Invention

The present invention relates generally to a track following positioning method, and more particularly to a method for controlling the position of a magnetic head relative to a magnetic media, such as a magnetic tape.

### Description of the Prior Art

Digital data is conventionally stored on magnetic media such as magnetic tape or diskette in the form of flux transitions on the surface of the media. Data recovery consists of determining the presence, and relative timing, of such flux transitions. Optimal operation of a recording device therefore depends upon the proper orientation and position of the magnetic head. Otherwise, the use of an improperly oriented and positioned recording head may result in the information being recorded in a manner that cannot be accurately retrieved on playback. Similarly, an improperly oriented or positioned playback head may result in the inaccurate retrieval of information even if the information was properly recorded. In either case, the integrity of the information storage system may be compromised and information may be lost.

Prior art methods for properly orienting and positioning a magnetic head include detecting the edge of a magnetic tape. Conventionally, such as for eight millimeter tapes, the location of a particular track from the bottom edge of a magnetic tape is standard. Therefore, properly locating the edge of tape is critical for accurately positioning a magnetic tape head. Precisely determining the edge of tape provides a reference position for the tape head to locate other track locations. The prior art methods which utilize detecting the edge of tape suffer from numerous drawbacks, however, including but not limited to inaccurate positioning of the tape head due to the use of analog detectors, number of circuits involved, etc.

What is needed therefore is a simple and effective method for controlling the position of a magnetic head relative to a magnetic media.

### SUMMARY OF THE INVENTION

The preceding and other shortcomings of prior art methods and systems are overcome by the present invention which provides a method for digitally detecting a top or bottom edge of a magnetic media, such as magnetic tape, to enable accurate positioning of a transversely movable magnetic head assembly at any of a plurality of track locations across a width of magnetic media. In particular, the magnetic head assembly is positioned to a location that is known to be on the tape. The magnetic head assembly typically includes one or more read and write heads. A reference signal is recorded, and the width is measured by stepping the head assembly down through the recorded signal and testing for the presence or absence of the signal. Then, the read/write head assembly is successively stepped down the center of the magnetic tape (with a write pass followed by a read pass) until it fails to recover a signal, thus indicating that the write head has gone off the edge of the tape. The read/write head assembly is then stepped back up on the tape until a signal is recovered with a width that is equal to one-half (1/2) the reference width. In the preferred embodiment of the invention, a digital burst detector is utilized to determined the presence or non presence of a specific signal.

The foregoing and additional features and advantages of this invention will become apparent from the detailed description and accompanying drawing figures that follow. In the figures and written description, numerals indicate the various features of the invention, like numerals referring to like features throughout for both the drawing figures and the written description.

### BRIEF DESCRIPTION OF THE DRAWINGS

FIG. 1 is a diagram of a read/write tape head assembly surface contacting a typical physical track layout of magnetic media;
FIG. 2 is a flow chart of an algorithm for digitally detecting the edge of a magnetic media to enable accurate positioning of the read/write head assembly across the width of the magnetic media;
FIG. 3 is a diagram of the read head in the read/write tape head assembly illustrated in FIG. 1 as the read head is stepped towards the bottom edge of tape one initial reference burst signal width; and
FIG. 4 is a diagram of the read/write tape head assembly illustrated in FIG. 1 when the edge of tape is detected, i.e. when the width of the measured signal equals one-half the initial reference burst signal width measured.

### DETAILED DESCRIPTION OF THE PREFERRED EMBODIMENT(S)

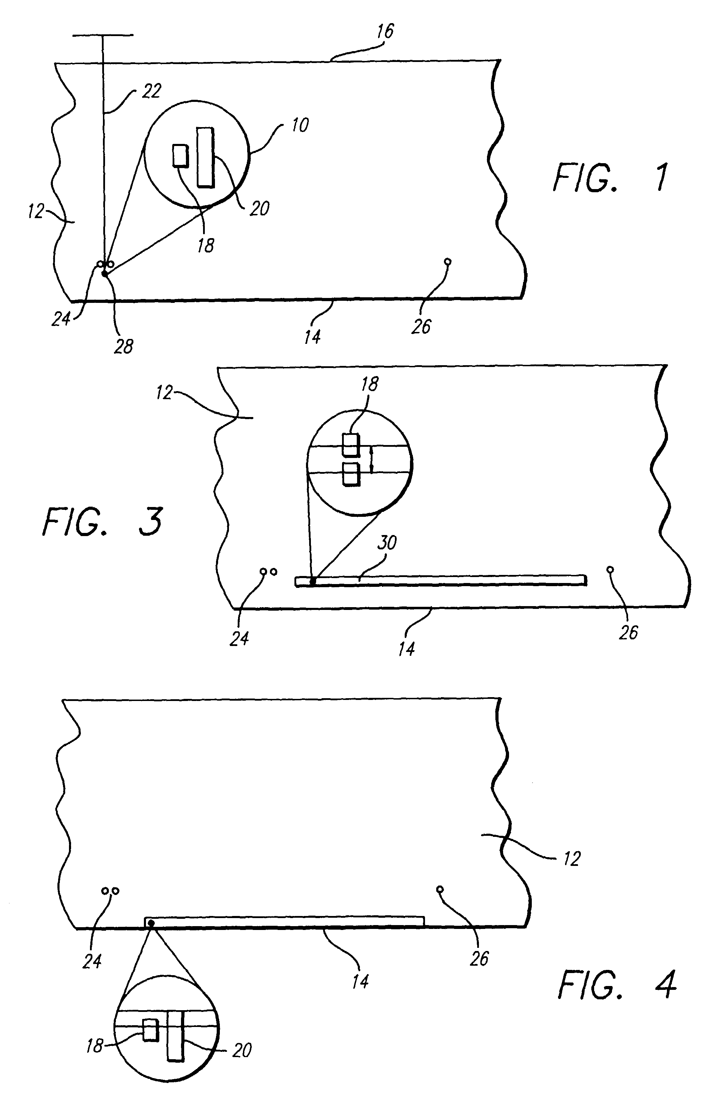

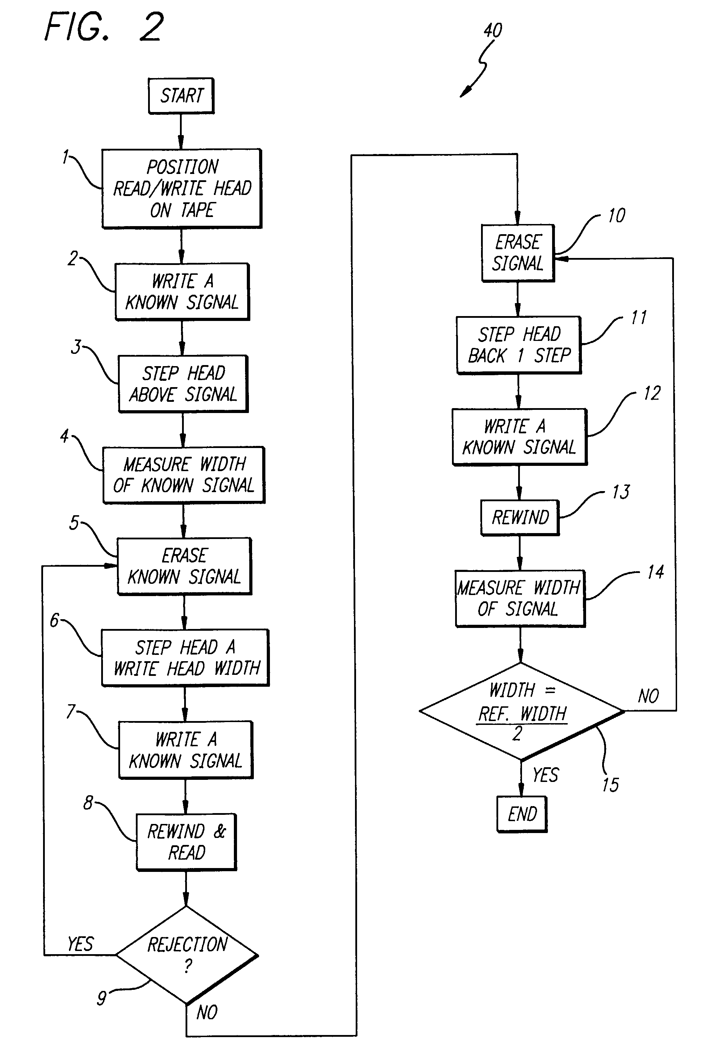

The present invention provides a method for digitally detecting a top or bottom edge of a magnetic media, such as magnetic tape, to enable accurate positioning of a transversely movable magnetic head assembly at any of a plurality of track locations across a width of magnetic media. Referring to FIG. 1, a diagram of a read/write head assembly 10 contacting a typical physical track layout of magnetic media, such as magnetic tape 12, is illustrated. For conventionally formatted magnetic tapes, such as eight millimeter tapes, the location of a particular track from the bottom edge 14 of the tape 12 is standard. Therefore, properly locating the edge 14 of tape 12 is critical for accurately positioning a magnetic tape head assembly 10. The present invention precisely determines the edge 14 of tape 12, therefore providing a reference position for the tape head assembly 10 to locate other track locations.

In accordance with the present invention, both the top edge 16 and bottom edge 14 of tape 12 may be determined. For illustrative purposes, however, the present invention will be described utilizing detection of the bottom edge 14 of tape 12. The present invention is not limited, however, to locating the bottom edge 14 of tape 12. For example, for conventional quarter-inch formatted magnetic tapes, the tracks are referenced to the center of the tape 12. Therefore, the present invention may be used to determine the top edge 16 and bottom edge 14 of tape 12.

As explained in detail below, the magnetic head assembly 10 is positioned to a location that is known to be on the tape 12. The magnetic head assembly 10 typically includes one or more read heads 18 and write heads 20. A reference signal is recorded, and the width is measured by stepping the head assembly 10 down through the recorded signal and testing for the presence or absence of the signal. Then, the read/write head assembly 10 is successively stepped down the center of the magnetic tape 12 (with a write pass followed by a read pass) until it fails to recover a signal, thus indicating that the write head 20 has gone off the edge 14 of the tape 12. The read/write head assembly 10 is then stepped back up on the tape 12 until a signal is recovered with a width that is equal to one-half (1/2) the reference width. In the preferred embodiment of the invention, a digital burst detector is utilized to determined the presence or non presence of a specific signal.

In particular, referring to FIG. 1, a tape head assembly 10 including a read head 18 and write head 20 detects the information stored on the magnetic media as it moves by the read head 18 at a predetermined speed. Digital data is conventionally stored on magnetic media in the form of flux transitions on the surface of the media. The magnetic media may be a magnetic tape 12, diskette or other magnetic media. For illustrative purposes, however, the following description of the invention will be described utilizing a magnetic tape 12. A typical physical track layout of magnetic tape 12 includes data tracks written in parallel in the forward and reverse directions.

In particular, FIG. 1 is a diagram of a read/write head assembly 10 surface contacting a typical physical track layout of magnetic tape 12. The read/write head assembly 10 is transversely movable across the width of the multitrack tape 12 as shown by the arrow 22. As is well known by those skilled in the art, the read/write head assembly 10 may be moved by a conventional bi-directional stepper motor (not shown) coupled to the head assembly 10 by a lead screw (not shown) or other conventional means. The tape head assembly 10 moves in either a first or second transverse direction, typically orthogonal, to the motion of the magnetic tape 12.

It is desired in the preferred embodiment that the tape head assembly 10 include one or more read and write heads, all having their centers substantially in alignment parallel to the direction of tape motion. As is shown in FIG. 1, the tape head assembly 10 includes a read head 18 and write head 20. The width of the write head 20 is approximately three times the width of the read head 18, which is approximately symmetrically centered about the write head 20.

As shown in FIG. 1, the tape 12 includes a top 16 and bottom edge 14 of tape 12. In accordance with conventional magnetic tape format standards, a plurality of beginning of tape (BOT) holes 24 are longitudinally located adjacent the physical beginning of tape 12. More particularly, as shown in FIG. 1, a pattern of double holes 24 indicative of the BOT are disposed at the beginning of tape 12. Located a predetermined distance from the BOT holes 24 are a single hole 26 indicative of the load point (LP), i.e., the point at which normal recording operations may begin. A conventionally formatted magnetic tape 12 also includes a series of end of tape (EOT) holes (not shown) longitudinally located adjacent the physical end of tape, as well as other tape markers (not shown).

The read/write head assembly 10 is initially positioned to a predetermined location 28 such that the head assembly 10 is completely within the tape 12. Referring to FIG. 3, prior to writing data on the forward and reverse tracks, an initial known or reference burst signal 30 is written utilizing the write head 20, preferably in the load zone area i.e. the region between the BOT 24 and the LP holes 26. The initial reference burst signal 30 may be an alternating current signal of fixed frequency and predetermined amplitude used for positioning of the head assembly 10 on the magnetic tape 12. The signal is also used to control the gain of a read amplifier in the tape transport system.

The width of the initial reference burst signal 30 is then measured (reference width) by stepping the read/write head assembly 10 along the width of the tape 12 down one step at a time towards the bottom edge 14 of tape 12 as shown in FIG. 3. After the reference width of the initial reference burst signal 30 has been determined, the initial reference burst signal 30 is erased and the next sequence of operations pertaining to determining the approximate edge 14 of tape 12 begins.

In particular, the edge 14 of tape 12 is subsequently determined utilizing the width of the initial reference burst signal 30. The read head 18 is stepped towards the bottom edge 14 of tape 12 one initial reference burst signal width and another reference burst signal is written. The tape 12 is then rewound and read to determine whether the previously written reference burst signal is present. Therefore, rather than checking the width of the reference burst signal, the tape 12 is checked to determine whether the reference burst signal is present.

If the reference burst signal is detected, the read head 18 is stepped down towards the edge 14 of tape 12 one initial reference burst width and another reference burst signal is written and read as described above. This step is continuously repeated until no reference burst signal is detected.

When no reference burst signal is detected, the signal is erased and the read head 18 is stepped back one initial reference burst signal width. In other words, the read head 18 is stepped one initial reference burst width in the opposite direction, away from the bottom edge 14 of tape 12.

A reference burst signal is then repeatedly written and measured until the width of the measured reference burst signal is one-half the initial reference burst width, thus indicating that at the time the signal was recorded, the write head 20 was half on and half off the edge 14 of tape 12 as shown in FIG. 4. Since the read head 18 is symmetrically centered on the write head 20, the edge 14 of tape 12 is detected.

FIG. 2 is a flow chart of an algorithm 40 for digitally detecting the edge 14 of the tape to enable accurate positioning of the read/write head assembly 10 across the width of the magnetic tape 12. Referring to FIGS. 1 and 2, in step 1, the read/write head assembly 10 is positioned to a predetermined location 28 on the magnetic tape 12 such that the read head 18 and write head 20 are completely within the tape 12. In step 2, an initial known or reference burst signal 30 is written by the write head 20.

While stepping the head assembly 10 one step at a time (step 3), the width of the initial reference burst signal 30 is measured and recorded (step 4). In step 3, the head assembly 10 is stepped a predetermined increment, which is determined in accordance with numerous factors, including the dimensions of the head assembly 10, tape 12, etc. The initial reference burst signal 30 is then erased (step 5).

Steps 6-9 are directed to searching for an approximate edge 14 of tape 12 utilizing the width of the initial reference burst signal determined in step 4. As previously noted, the present invention may be used for locating the top 16 or bottom edge 14 of tape 12. For illustrative purposes, however, the present algorithm 40 will be described in the context of locating a bottom edge 14 of tape 12. In particular, referring to FIG. 3, in step 6, the read head 18 is stepped towards the bottom edge 14 of tape 12 one initial reference burst signal width. At this position, a known signal is then written (step 7). The tape 12 is rewound to the initial position in step 7 before the known signal was written and then read in step 8. In step 9, if the known signal is detected, steps 5-9 are repeated.

When no known signal is detected (step 9), the signal is erased (step 10) and the read head 18 is stepped back one initial reference burst signal width (step 11), away from the bottom edge 14 of tape 12. A known signal is then written in step 12. The tape 12 is then rewound once again (step 13) and the width of the signal is measured (step 14). Referring to FIG. 4, in step 15, if the width of the measured signal equals one-half the initial reference burst signal width measured in step 4, the edge 14 of tape 12 is detected. If the width does not equal one-half the initial reference burst signal width, steps 10-15 are repeated until the width of the measured signal equals one-half the initial reference burst signal width (step 15).

It will be appreciated that the present invention may be adopted to additionally be used to locate the top edge 16 of tape 12 utilizing the algorithm 40 shown in FIG. 2. As previously stated, a digital burst detector is preferably utilized to determined the presence or non presence of the known or reference burst signal. In particular, the read/write head assembly 10 is initially positioned to a predetermined location 28 such that the head assembly 10 is completely within the tape 12. Prior to writing data on the forward and reverse tracks, an initial known or reference burst signal 30 is written utilizing the write head 20, preferably in the region between the BOT 24 and the LP holes 26. The width of the initial reference burst signal 30 is then measured by stepping the read/write head assembly 10 along the width of the tape 12 up one step at a time towards the top edge 16 of tape 12. After the width of the initial, reference burst signal 30 has been determined, the initial reference burst signal 30 is erased and the next sequence of operations pertaining to determining the approximate top edge 16 of tape 12 begin.

In particular, the top edge 16 of tape 12 is subsequently determined utilizing the width of the initial reference burst signal 30. The read head 18 is stepped towards the top edge 16 of tape 12 one initial reference burst signal width and another reference burst signal is written. The tape 12 is then rewound and read to determine whether the previously written reference burst signal is present.

If the reference burst signal is detected, the read head 18 is stepped up towards the top edge 16 of tape 12 one initial reference burst width and another reference burst signal is written and read as described above. This step is continuously repeated until no reference burst signal is detected.

When no reference burst signal is detected, the signal is erased and the read head 18 is stepped back down initial reference burst signal width. In other words, the read head 18 is stepped one initial reference burst width in the opposite direction, away from the top edge 16 of tape 12.

A reference burst signal is then repeatedly written and measured until the width of the measured reference burst signal is one-half the initial reference burst width, thus indicating that at the time the signal was recorded, the write head 20 was half on and half off the top edge 16 of tape 12. Since the read head 18 is symmetrically centered on the write head 20, the top edge 16 of tape 12 is detected.

It will be appreciated by persons skilled in the art that the present invention is not limited to what has been shown and described hereinabove, nor the dimensions of sizes of the physical implementation described immediately above.

## Claims

1. A method for positioning a head assembly by detecting an edge of a magnetic medium, comprising the steps of:
positioning said head assembly on a location on said magnetic medium;
recording a reference signal;
determining width of said reference signal;
moving said head assembly in a first direction towards said edge of said magnetic medium until a known signal is no longer detected; and
moving said head assembly in a second direction opposite said first direction on said magnetic medium until said known signal having a width that is equal to one-half width of said reference signal is detected.

2. The method claimed in claim 1, wherein said head assembly is a magnetic head assembly including at least one read and one write head.

3. The method claimed in claim 1, wherein said magnetic medium is a magnetic tape.

4. The method claimed in claim 1, wherein said step of determining width of said reference signal further comprises the step of:
determining width of said reference signal utilizing said head assembly.

5. The method claimed in claim 4, wherein said step of detecting said reference signal utilizing said head assembly further comprises the step of:
stepping said head assembly down through said reference signal to detect presence of said reference signal.

6. The method claimed in claim 5, wherein said step of moving said head assembly in a first direction towards said edge of said magnetic medium until a known signal is no longer detected further comprises the step of:
utilizing a digital burst detector to detect the presence of said known signal.

7. The method claimed in claim 1, wherein said step of moving said head assembly in a first direction towards said edge of said magnetic medium until a known signal is no longer detected further comprises the steps of:
continuously stepping said head assembly one initial reference burst signal width towards said edge of said magnetic medium, writing a known signal and positioning said head assembly to detect said known signal, until said known signal is no longer detected.

8. The method claimed in claim 1, wherein said method may be used to locate a top edge of said magnetic medium.

9. The method claimed in claim 1, wherein said method may be used to locate a bottom edge of said magnetic medium.

10. The method claimed in claim 1, wherein said reference signal is written on said magnetic medium between BOT and LP regions of said magnetic medium.

11. The method claimed in claim 1, wherein said step of moving said head assembly in a first direction towards said edge of said magnetic medium until a known signal is no longer detected further comprises the step of:
successively stepping said head assembly one reference signal width at a time.

12. The method claimed in claim 11, wherein said step of moving said head assembly in a second direction opposite said first direction on said magnetic medium until said known signal having a width that is equal to one-half width of said reference signal is detected further comprises the step of:
stepping said head assembly one reference signal width at a time.

13. The method claimed in claim 1, wherein when said known signal is no longer detected, said head assembly has gone off said edge of said magnetic medium.

14. The method claimed in claim 1, wherein said step of positioning said head assembly on a location on said magnetic medium further comprises the step of:
positioning said head assembly on said location on said magnetic medium such that said head assembly is completely disposed within said magnetic medium.

15. An method for detecting an edge of a tape to enable accurate positioning of a head assembly having a read and write head across a width of said tape, comprising the steps of:
positioning said head assembly to a predetermined location on said tape such that said head assembly is completely within said tape;
writing an initial reference burst signal with said write head;
measuring and recording a width of said initial reference burst signal while stepping said head assembly one step at a time along said initial reference burst signal;
erasing said initial reference burst signal;
stepping said read head towards an edge of said tape to a position one initial reference burst signal width;
continuously writing a known signal at this position and rewinding said tape to said initial position before said known signal was written and then read until said known signal is detected;
when no known signal is detected, erasing said signal and stepping said read head one initial reference burst signal width back, away from said edge of tape; and
writing a known signal, rewinding said tape again and measuring a width of said signal until the said width of said measured signal equals one-half said initial reference burst signal width measured, thus detecting an edge of said tape.

16. The method claimed in claim 15, wherein said method may be used to locate a top edge of said tape.

17. The method claimed in claim 15, wherein said method may be used to locate a bottom edge of said tape.

18. The method claimed in claim 15, wherein a digital burst detector is utilized to determined the presence of said known signal.

19. The method claimed in claim 15, wherein said reference burst signal is written in the region between BOT and LP holes on said tape.
